# FASCICULE DE BREVET EUROPEEN

(11) **EP 3 143 802 B1**
(45) Date de publication et mention de la délivrance du brevet: **31.03.2021**
(21) Numéro de dépôt: 15722217.5
(22) Date de dépôt: 13.05.2015
(51) Int. Cl.: H04W 48/18, H04W 64/00, H04W 88/06

(54) **SYSTEME, POUR UN TERMINAL MOBILE, D'AIDE A LA SELECTION D'UNE INFRASTRUCTURE DE RADIOCOMMUNICATION, ENSEMBLE ET PROCEDE ASSOCIES**
SYSTEM, FÜR EIN MOBILES ENDGERÄT, ZUR UNTERSTÜTZUNG BEI DER AUSWAHL EINER FUNKKOMMUNIKATIONSINFRASTRUKTUR, ZUGEHÖRIGE ANORDNUNG UND VERFAHREN
SYSTEM, FOR A MOBILE TERMINAL, FOR ASSISTING IN THE SELECTION OF A RADIO COMMUNICATION INFRASTRUCTURE; ASSOCIATED ASSEMBLY AND METHOD

(30) Priorité: 15.05.2014 FR 1454353
(43) Date de publication de la demande: 22.03.2017
(73) Titulaire: Centre National d'Etudes Spatiales, 75001 Paris (FR)
(72) Inventeur: BEAS-GARCIA, Jacques, F-31400 Toulouse (FR)
(74) Mandataire: Delorme, Nicolas
(86) Numéro de dépôt international: PCT/EP2015/060705
(87) Numéro de publication internationale: WO 2015/173366

(56) Documents cités:
- WO-A1-2012/112097
- US-A1- 2003 003 922
- US-A1- 2009 005 041
- US-A1- 2009 245 118
- US-A1- 2011 310 840
- US-A1- 2013 308 470
- PAWAR P ET AL: "Towards Location Based QoS-Aware Network Selection Mechanism for the Nomadic Mobile Services", CONSUMER COMMUNICATIONS AND NETWORKING CONFERENCE, 2009. CCNC 2009. 6TH IEEE, IEEE, PISCATAWAY, NJ, USA, 10 janvier 2009 (2009-01-10), pages 1-5, XP031425634, ISBN: 978-1-4244-2308-8

## Description

L'invention a pour domaine celui des systèmes, pour un terminal mobile, un ensemble et un procédé, d'aide à la sélection d'une infrastructure de radiocommunication parmi une pluralité d'infrastructures de radiocommunication disponibles, afin qu'une application exécutée sur le terminal mobile puisse communiquer avec une ressource distante et procurer à son utilisateur une qualité d'expérience satisfaisante.

Dans le présent document, par le terme « terminal mobile » est désigné tout type d'équipement de communication portable, tel que par exemple un téléphone, un smartphone, une tablette, ou l'équivalent.

Certaines applications logicielles, au cours de leur exécution sur un terminal mobile, doivent échanger des données avec un système distant, via un réseau de communication auquel le terminal mobile accède par l'intermédiaire d'une infrastructure de radiocommunication.

Une infrastructure de radiocommunication comporte une pluralité de points d'accès, fixes. Chaque point d'accès possède une portée radioélectrique, définissant une cellule de couverture autour de son antenne. Les différentes cellules des points d'accès d'une même infrastructure définissent ensemble la couverture de l'infrastructure.

Une infrastructure de radiocommunication met en œuvre un protocole de communication particulier, qui permet l'établissement d'une liaison entre un terminal mobile et un de ses points d'accès, puis le maintien de cette liaison et la communication de données sur cette liaison.

De nombreux protocoles de communication sont connus par l'homme du métier, tels que par exemple les protocoles 3G, LTE, WiFi, Wi-MAX, Bluetooth ou l'équivalent. Par protocole, on entend la granularité la plus faible d'un protocole, allant jusqu'aux groupes de versions compatibles entre elles. Ainsi, le protocole WiFi se subdivise en protocoles WiFi-b, WiFi-g, WiFi-n, etc.

Le protocole de communication mis en œuvre par une infrastructure définit le type de cette infrastructure.

Pour établir, maintenir et utiliser une liaison avec une infrastructure d'un type particulier, le terminal mobile est muni d'un module d'émission/réception d'ondes radioélectriques adapté au protocole mis en œuvre par cette infrastructure.

De nos jours, un terminal mobile comporte une pluralité de modules d'émission/réception, chaque module étant associé à un protocole particulier et par conséquent à un type d'infrastructure.

Ainsi, à un instant donné, plusieurs infrastructures sont en général disponibles pour permettre au terminal mobile d'établir une liaison lui permettant d'accéder au réseau. Il s'agit alors de choisir une infrastructure parmi l'ensemble des infrastructures de communication disponibles.

Il est connu qu'un terminal mobile soit capable de découvrir l'ensemble des infrastructures disponibles se situant dans son voisinage. Par exemple, le terminal mobile est propre à commander successivement chacun de ses modules d'émission/réception pour qu'il scanne sa bande de fréquences de fonctionnement, à la recherche de signaux de balise émis par les points d'accès d'une infrastructure. En fonction des signaux de balise détectés, un terminal mobile établit une liste des infrastructures disponibles depuis l'endroit où il se trouve. Le terminal mobile sélectionne ensuite une infrastructure dans la liste obtenue, par exemple l'infrastructure dont les balises sont les plus puissantes.

Il est également connu, par exemple du document US 2012/0196644, qu'un utilisateur d'un terminal mobile puisse interroger un serveur stockant une cartographie indiquant, pour chaque point d'une région géographique, une liste des infrastructures accessibles depuis ce point, ainsi que, pour chaque infrastructure accessible de cette liste, une information sur la qualité de service qui peut être attendue d'une liaison établie depuis ce point avec cette infrastructure. En fonction du point courant où se situe le terminal mobile, celui-ci détermine la liste des infrastructures disponibles et sélectionne l'infrastructure ayant la meilleure qualité de service attendue.

Ces solutions de l'état de la technique sont destinées à un terminal mobile statique, c'est-à-dire sensiblement immobile en un point et qui dispose du temps nécessaire soit pour découvrir de lui-même son environnement radioélectrique, soit pour interroger un serveur comportant une cartographie de l'environnement radioélectrique, puis déterminer une liste des infrastructures accessibles, avant d'en sélectionner une et de s'y connecter.

Cependant, si le terminal mobile se déplace, le processus d'établissement d'une liste d'infrastructures disponibles doit être exécuté périodiquement en chaque nouveau point de localisation du terminal mobile.

Par exemple pour ce qui concerne le processus de découverte, si le terminal mobile a établi une première liaison avec un point d'accès d'une infrastructure, lorsque cette première liaison est rompue ou sur le point de se rompre, le terminal mobile exécute à nouveau le processus de découverte. Il débute avec le module d'émission/réception utilisé pour établir la première liaison dans le but de détecter un autre point d'accès de la même infrastructure et d'établir ainsi rapidement une seconde liaison avec cette même infrastructure et basculer la communication en cours le plus rapidement possible. En cas d'échec de l'établissement d'une telle seconde liaison, le processus de découverte est élargi aux autres modules d'émission/réception du terminal mobile afin de découvrir d'autres infrastructures permettant la poursuite de la communication en cours.

Un tel procédé présente le risque de conduire à des basculements fréquents d'une infrastructure à une autre, ce qui est pénalisant pour la qualité de service de la communication en cours.

Outre les difficultés pratiques de découvrir l'environnement, de choisir une infrastructure, puis enfin d'établir une liaison, ces étapes sont gourmandes en énergie électrique. Lorsque ces étapes, qui ne relèvent pas de la communication de données pour l'exécution de l'application exécutée par le terminal mobile, sont à réaliser à chaque nouvelle position relativement stable du terminal mobile, l'autonomie de ce dernier est fortement pénalisée.

De plus, il faut que le terminal mobile reste en un point suffisamment longtemps pour découvrir son environnement, choisir une infrastructure et établir une liaison avant toute communication. Si le terminal mobile se déplace trop rapidement par rapport aux dimensions des cellules d'une infrastructure, l'application n'aura pas le temps d'échanger des données avec le serveur distant. C'est le cas par exemple d'un terminal mobile placé à bord d'une voiture circulant dans une zone pourtant située à l'intérieure de la couverture d'une infrastructure Wi-Fi. Bien que les points d'accès de cette infrastructure soient visibles et accessibles, le terminal mobile ne reste pas suffisamment longtemps dans la cellule associée à chaque point d'accès de l'infrastructure pour établir une liaison permettant à l'application de communiquer avec le serveur distant.

Enfin, le terminal mobile est propre à exécuter les instructions d'applications logicielles de différents types, selon le format des données échangées avec le serveur distant : Un premier type est par exemple constitué par les applications permettant de consulter une page d'un site internet selon le format HTTP. Un second type est par exemple constitué par les applications permettant de visualiser, sur le terminal mobile, une vidéo selon le format « streaming » ; Un troisième type est par exemple constitué par les applications permettant de télécharger, sur le terminal mobile, un fichier volumineux selon le format FTP ; etc.

Or, certain type d'infrastructures sont plus adaptés que d'autres pour la communication de certain format de données et par conséquent mieux adaptés que d'autres à l'exécution d'un type d'application.

Il est donc nécessaire de tenir compte des spécificités des infrastructures disponibles en fonction du type d'application exécutée afin de fournir à l'utilisateur du terminal mobile la meilleure qualité d'expérience possible.

Par qualité d'expérience, on entend dans le présent document non pas seulement la qualité de service de la liaison entre le module d'entrée/sortie du terminal mobile et le point d'accès de l'infrastructure à laquelle il est connecté, mais plus généralement l'ensemble des paramètres pouvant affecter la perception par l'utilisateur de l'exécution de l'application.

Ainsi, la qualité d'expérience est ici associée non seulement aux couches les plus basses du modèle OSI, qui sont relatives au protocole de communication de la liaison, mais également aux couches les plus hautes du modèle OSI, qui sont relatives au format des données échangées par l'application.

C'est par exemple le cas d'une infrastructure par satellites qui propose des débits très intéressants mais avec un temps de latence plus important que les infrastructures classiques. Une infrastructure par satellites sera ainsi plus adaptée pour le transfert de données volumineuses, alors qu'une infrastructure 3G, proposant une liaison plus lente mais avec un faible temps de latence, sera plus adaptée pour une consultation ponctuelle d'une page d'un site internet, pour par exemple mettre à jour une application météorologique.

Le document Pawar et al.: "Towards Location Based QoS-aware Network Selection Mechanism for the Nomadic Mobile Services", décrit un procédé de sélection d'un réseau, en tenant compte des prédictions de la qualité de services que les applications exécutées sur un terminal puissent avoir sur chacun des réseaux au long d'un déplacement.

Le document WO2012/112097 dévoile le fait que l'utilisateur saisit des information générales concernant son trajet (point de départ, d'arrivée, QoS requise) et qu'ensuite l'application calcule les trajectoires optimales qui satisfont ces critères.

Le document US2009/005041 dévoile un procédé pour la sélection d'un réseau radio, effectué par un terminal mobile, en prenant en compte une base de données -comportant des cartographies associées à des infrastructures et donnant, dans un point, la valeur de la QoS-, des critères utilisateur et un vecteur de mouvement. Le procédé inclut le calcul d'une métrique de performance minimale du réseau courant à la position courante du terminal et aussi des métriques de performance pour toute position estimée du terminal après une période T. De même, le procédé inclut le calcul desdites métriques pour des infrastructures alternatives disponibles aux positions courante et estimées du terminal. Suite à une comparaison desdites métriques, l'infrastructure avec la métrique le plus élevée est sélectionnée.

L'invention a donc pour but de pallier les problèmes précités.

L'invention a notamment pour but d'offrir un système permettant la sélection parmi les infrastructures disponibles de la meilleure infrastructure en termes de qualité d'expérience compte tenu du déplacement du terminal mobile selon une trajectoire.

L'invention a donc pour objet un système, un ensemble et un procédé selon les revendications indépendantes 1, 8 et 11.

L'invention prend en compte la trajectoire de l'utilisateur dans la sélection d'une infrastructure parmi plusieurs infrastructures disponibles.

Dans le présent document, une position associe un point géographique (défini par trois coordonnées spatiales) et un instant (défini par une coordonnée temporelle), une trajectoire est un ensemble de positions successives comportant au moins la position courante et une position à venir du terminal mobile.

Ainsi, une première infrastructure offrant une couverture continue le long d'une trajectoire sera à choisir de manière privilégiée par rapport à une seconde infrastructure offrant sur une première portion de la trajectoire un débit élevé, mais n'offrant aucune couverture sur une seconde portion de la trajectoire. Cette seconde infrastructure, lors du passage de la première à la seconde portion de la trajectoire, conduit à l'interruption de la communication en cours et l'application ne pourra pas s'exécuter convenablement, ce que constatera immédiatement l'utilisateur.

La prise en compte de la trajectoire de l'utilisateur est d'autant plus nécessaire que la vitesse du terminal mobile est élevée de sorte que le temps qu'il passe dans la cellule associée à un point d'accès se réduit. Ainsi, une infrastructure peut, à faible vitesse, offrir un débit satisfaisant, mais à vitesse élevée présenter un débit fortement réduit, la majeure partie du temps que le terminal mobile passe dans une cellule étant utilisée à l'établissement de la liaison plutôt qu'à la communication de données.

L'invention et ses avantages seront mieux compris à la lecture de la description qui va suivre de plusieurs modes de réalisation, donnés uniquement à titre d'exemple non limitatif, la description étant faite en se référant aux dessins annexés sur lesquels :
- la figure 1 est une représentation schématique du système d'aide à la sélection d'une infrastructure de radiocommunication selon l'invention ;
- la figure 2 est une représentation schématique d'un premier mode de réalisation du procédé d'aide à la sélection d'une infrastructure de radiocommunication selon l'invention ; et,
- La figure 3 est une représentation schématique d'une utilisation particulière du procédé de la figure 2.

Le système d'aide à la sélection d'une infrastructure de radiocommunication est destiné à être mis en œuvre par un terminal mobile hôte.

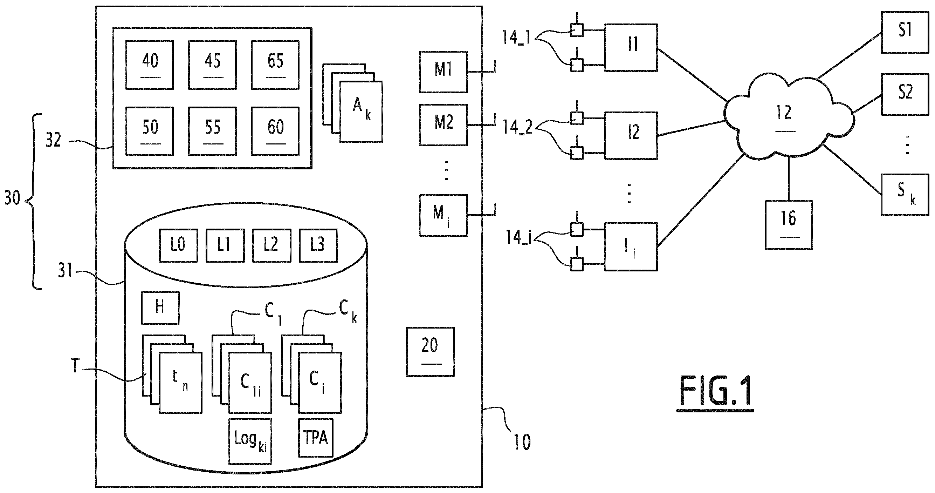

Comme représenté schématiquement sur la figure 1, le terminal mobile 10 comporte une pluralité d'applications Ak, propres à être exécutées sur le terminal mobile, éventuellement simultanément.

Lors de son exécution, une application Ak nécessite l'échange de données avec un serveur distant Sₖ, qui est connecté à un réseau de communication 12, tel que l'Internet.

Une application Aₖ appartient à un type particulier. Le type d'une application est caractérisé par le format des échanges de données avec le serveur Sₖ. Pour simplifier la description, les applications Aₖ sont de type différent les unes des autres. En variante, plusieurs applications peuvent être du même type. Il peut s'agir par exemple d'un navigateur Internet, d'un système d'aide au déplacement, d'un logiciel de lecture d'une vidéo etc.

Le terminal mobile 10 comporte une pluralité de modules d'émission/réception Mi. Chaque module d'émission/réception est associé à un protocole de communication déterminé Pi. Ainsi, un module d'émission/réception Mi permet l'établissement et le maintien d'une liaison radio avec une infrastructure de radiocommunication du type défini par ledit protocole Pi.

Dans la zone géographique dans laquelle le terminal mobile 10 est amené à se déplacer, différentes infrastructures li sont accessibles. Pour simplifier la description, chaque infrastructure li correspond à un protocole Pi et il n'y a, dans l'environnement du terminal mobile 10, qu'une infrastructure de chaque type. En variante, plusieurs infrastructures peuvent être du même type.

Chaque infrastructure li possède une pluralité de points d'accès 14_i. Un point d'accès 14_i permet à un terminal mobile, se situant dans la cellule de couverture associée au point d'accès considéré, d'établir une liaison de radiocommunication temporaire avec l'infrastructure li correspondante.

Chaque infrastructure li est par ailleurs connectée au réseau 12.

Ainsi, lorsque le terminal mobile 10 a établi une connexion avec l'une des infrastructures au travers d'un point d'accès, l'application Ak exécutée sur le terminal mobile 10 peut accéder à la ressource distante sur le serveur Sₖ.

Le terminal mobile 10 comporte un module de localisation 20 permettant de déterminer, à chaque instant, une position courante du terminal mobile 10 : P(X, Y, Z, t). Une position comporte trois coordonnées spatiales (X, Y et Z, où les coordonnées X et Y donnent un point sur un plan horizontal de référence et la coordonnée Z donne une hauteur - altitude - par rapport au plan horizontal de référence) et une coordonnée temporelle (t).

On connait différents moyens de localisation d'un équipement.

De préférence, le module de localisation 20 du terminal mobile 10 est un moyen de positionnement par satellites amélioré. Des signaux de positionnement émis par une constellation de satellites sont reçus par le moyen de localisation 20, qui, à partir de ces signaux et d'informations de correction des distorsions introduites par la ionosphère sur ces signaux, détermine la position instantanée du terminal mobile 10 avec une précision pouvant aller jusqu'à l'ordre du centimètre.

D'autres moyens de localisation sont connus, tels que le moyen A-GPS, qui est un moyen de positionnement par satellites augmenté d'une composante au sol pour améliorer la précision du positionnement. Il existe aussi un mode différentiel appelé D-GPS.

Le protocole de téléphonie mobile GSM, permet également de localiser un téléphone portable par triangulation des signaux échangés entre le téléphone et un groupe de points d'accès de l'infrastructure GSM.

Les précédents moyens de localisation ne fonctionnent correctement qu'à l'extérieur. A l'intérieur d'un bâtiment, la position instantanée d'un terminal mobile peut être obtenue à partir d'une pluralité de points d'accès WiFi dont le point d'implantation est connu. Par exemple, le procédé de « WiFi finger printing» peut être mise en œuvre.

On connait également, le moyen de localisation iBeacon pour le cas d'une infrastructure Bluetooth, qui permet une localisation dans les bâtiments avec une précision de l'ordre du mètre.

Avantageusement, le module de localisation 20 intègre également une centrale inertielle permettant une estimation de la position courante lorsque celle-ci ne peut être mesurée directement par les moyens satellitaires. Ceci est par exemple le cas lorsque l'utilisateur du terminal mobile entre à l'intérieur d'un bâtiment. La centrale inertielle permet d'estimer la position instantanée courante depuis la dernière position mesurée en intégrant les déplacements élémentaires du terminal mobile.

Le terminal mobile 10 comporte un système 30 d'aide à la sélection d'une infrastructure, qui comporte une base de données 31 et un logiciel 32.

La base de données 31 comporte une pluralité de tables de cartographies Cₖ, chaque table de cartographies étant associée à un type d'applications particulier, c'est-à-dire à une application Aₖ particulière dans le cadre de la présente description.

Une table de cartographies Cₖ comporte une pluralité de cartographies Cₖᵢ, chaque cartographie étant associée à une infrastructure li.

Une cartographie Cₖᵢ donne, pour chaque point d'une zone géographique d'intérêt, la qualité d'expérience associée à l'utilisation de l'application Aₖ, lorsque le téléphone mobile sur lequel elle est exécutée est connecté à l'infrastructure Iᵢ.

De préférence, une cartographie Cₖᵢ comporte une pluralité de cartographies élémentaires Cₖᵢ(hⱼ), la cartographie élémentaire Cₖᵢ(hⱼ) donnant, pour chaque point de la zone géographique d'intérêt, la qualité d'expérience associée à l'utilisation de l'application Aₖ, au cours de la plage horaire hⱼ, lorsque le téléphone mobile sur lequel elle est exécutée est connecté à l'infrastructure Iᵢ. La plage horaire hⱼ est une plage horaire à l'intérieur d'une journée, d'une semaine, ou de tout intervalle de temps discriminent. En effet, certaines infrastructures, réservées en journée à, certains usages et certains utilisateurs sont libres d'accès en fin de journée. Il s'agit par exemple des infrastructures Wi-Fi dans les hôpitaux, qui sont accessibles aux patients en fin de journée afin qu'ils puissent regarder la TV, collecter leurs emails, recevoir des coups de téléphone, ces infrastructures étant éteintes en journée afin de ne pas interférer avec le matériel médical.

La base de données 31 comporte une table de trajectoires T regroupant une pluralité de trajectoires tₙ.

Dans le présent document, une trajectoire tₙ est constituée par une pluralité de positions intermédiaires, entre une position de départ, à un instant de départ, et une position d'arrivée, à un instant d'arrivée. Les positions intermédiaires sont par exemple séparées les unes des autres d'une période d'échantillonnage Δt.

A la place ou en plus de la table de trajectoires T, la base de données 31 comporte un historique H des positions courantes passées du terminal mobile 10. L'historique permet de mémoriser les positions courantes délivrées par le module de localisation 20 sur une fenêtre de temps D qui précède l'instant courant t.

Le logiciel 32 du système 30 comporte un module 40 de sélection d'une trajectoire.

Le logiciel 32 du système 30 comporte un module 45 de réduction, permettant de réduire le nombre d'infrastructures mentionnées dans une liste d'entrée pour générer une liste de sortie.

Le logiciel 32 du système 30 comporte un module 50 de corrélation propre à croiser une cartographie Cᵢₖ avec au moins une position à venir du terminal mobile pour déterminer un coefficient de corrélation.

Le logiciel 32 du système 30 comporte un module 55 de classement propre à calculer la valeur d'une fonction de coût.

Le logiciel 32 du système 30 comporte un module 60 de qualité d'expérience permettant de mesurer une grandeur relative à la qualité d'expérience associée à l'utilisation de l'application Ak lorsqu'elle est exécutée par le terminal mobile, celui-ci étant connecté à une infrastructure Ii.

Le logiciel 32 du système 30 comporte un module 65 de détermination de trajectoires alternatives.

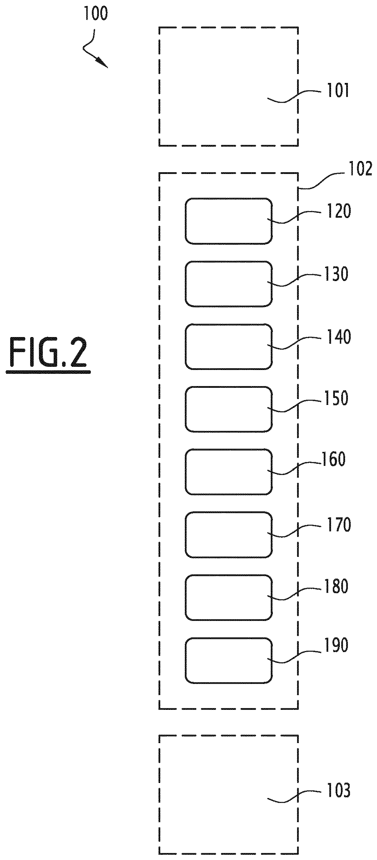

µLe procédé d'aide à la sélection va maintenant être présenté en détail en référence à la figure 2.

Dans une phase 101 préalable, la base de données 31 est paramétrée. Le système 30 se connecte pour cela à un terminal de service 16, afin de télécharger différentes données.

En particulier, durant la phase 101 de paramétrage, le système 30 télécharge une liste L0 recensant toutes les infrastructures Ii disponibles dans la zone géographique dans laquelle l'utilisateur du terminal mobile 10 est amené à se déplacer.

Le système 30 télécharge une pluralité de cartographies. En fonction de la liste L0 et des applications Aₖ installées sur le terminal mobile 10, les cartographies Cₖᵢ correspondantes sont téléchargées depuis le terminal de service 16. De préférence, pour une même application et une même infrastructure, plusieurs cartographies élémentaires Cₖᵢ(hⱼ) sont téléchargées, chacune de ces cartographies correspondant à une information de qualité d'expérience pour une plage horaire hⱼ.

Le procédé 102 est ensuite mis en œuvre lors de l'exécution par le terminal mobile 10 du système 30.

A l'étape 120, une estimation d'une position à venir du terminal mobile 10 est déterminée.

Pour ce faire, au début de son déplacement, l'utilisateur sélectionne, dans la base de données 31, la trajectoire tₙ qu'il va effectuer.

Par exemple, lorsqu'il monte dans le bus de 8h50 de la ligne n°3 depuis l'arrêt situé devant son domicile, l'utilisateur sélectionne dans la base de données 3, l'itinéraire du bus n°3 et sélectionne, dans la table horaire de cette ligne, l'arrêt situé devant son domicile et l'heure prévu d'arrivée du bus. Pour cela, lors de la phase de paramétrage 101, les itinéraires et tables horaires des lignes de bus de la région à l'intérieur de laquelle l'utilisateur du terminal mobile 10 est amené à se déplacer, ont été téléchargés dans la base de données 31, depuis un site Internet mettant à disposition l'ensemble des itinéraires des lignes de bus de la région. A partir de ces informations, la trajectoire tₙ correspondant aux différentes positions à venir du terminal mobile est déterminée compte tenu de l'itinéraire sélectionné et des horaires de passage prévus en chaque arrêt de cet itinéraire.

Une trajectoire tₙ de la base de données 31 peut également résulter d'une étape d'apprentissage réalisée au cours de la phase de paramétrage 101.

Par exemple, pour que la trajectoire de son domicile à son bureau soit stockée dans la base de données 31, l'utilisateur parcours une fois cette trajectoire en enregistrant les positions courantes successives délivrées par le module de localisation 20. A la fin de cette étape d'apprentissage, les positions courantes successives sont associées les unes aux autres dans un multiplet constituant la trajectoire tₙ, qui est mémorisée dans la base de données. Dans une phase ultérieure d'utilisation, lorsque l'utilisateur va à nouveau effectuer le déplacement de son domicile à son bureau, il sélectionne la trajectoire tₙ précédemment apprise, qui est actualisée en prenant comme position de départ la position courante délivrée par le module de localisation 20.

Le procédé 102 se poursuit par une étape 130 au cours de laquelle une première liste L1 des infrastructures Ii accessibles est déterminée.

L'exécution du module de réduction 45 permet d'identifier le type d'application Ak en train d'être exécutée par le terminal mobile 10. Le module de réduction 45 lit les cartographies correspondantes Cₖᵢ dans la base de données 31.

En fonction de la plage horaire d'exécution du module de réduction 45, le module de réduction 45 lit les cartographies élémentaires Cₖᵢ(hⱼ) qui correspondent à cette plage horaire parmi chaque cartographie associée à l'application Ak. Le module de réduction 45 élimine de la liste L0 les infrastructures pour lesquelles il n'y a pas de cartographie correspondante dans la base de données 31. Une liste L1 réduite est ainsi obtenue.

En variante, le procédé selon l'invention est mis en œuvre en passant comme paramètre la plage horaire pour laquelle l'utilisateur souhaite déterminer la meilleure infrastructure pour l'exécution de l'application Aₖ. En conséquence, le module de réduction 45 prend en compte la valeur du paramètre de plage horaire qui lui est passé.

A l'étape suivante 140, le module de réduction 45 réduit la liste L1 sur la base de paramètres supplémentaires, tels que des paramètres d'usage du terminal mobile 10. Ces paramètres sont définis lors de la phase initiale de paramétrage de la base de données 31.

En particulier, certaines infrastructures disponibles ne sont accessibles qu'à des utilisateurs ayant un abonnement spécifique. Si l'utilisateur n'est pas abonné à cette infrastructure, l'infrastructure correspondante est supprimée de la liste L1.

Ainsi, la liste L1 des infrastructures disponibles est contrainte de manière à obtenir une liste L2.

A l'étape 150, le module 50 de corrélation pondère chaque cartographie Cₖᵢ associée à une infrastructure Iᵢ de la liste L2 avec des caractéristiques de fonctionnement du terminal mobile 10. Ces caractéristiques sont par exemple téléchargées depuis un serveur applicatif au cours de la phase de paramétrage 101.

Il peut par exemple s'agir d'un gain du module d'émission/réception associé au protocole GSM. En effet, d'un modèle à l'autre de téléphone mobile, ce gain n'est pas le même. Ceci permet à certains téléphones mobiles qui présentent un gain élevé de pouvoir se connecter à un point d'accès d'une infrastructure GSM même en bordure d'antenne, alors que d'autres téléphones mobiles, qui présentent un gain plus faible, ne peuvent se connecter à ce point d'accès qu'à condition d'être proche de l'antenne du point d'accès.

Une cartographie pondérée Cₖᵢ* est ainsi obtenue.

A l'étape 160, le module 50 de corrélation calcule un coefficient de corrélation entre chaque cartographie pondérée C_{Ii}* associée à une infrastructure Iᵢ de la liste L2 et la trajectoire tₙ choisie à l'étape 120. Ce coefficient est noté Corr(Cₖᵢ ; tₙ).

Le coefficient de corrélation résulte par exemple de l'intégration le long de la trajectoire tₙ, d'une fonction de la qualité d'expérience locale indiquée sur la cartographie pondérée Cₖᵢ*. Dans un mode de réalisation élémentaire, la fonction de la qualité d'expérience est la fonction identité.

A l'étape 170, un module 55 de classement calcule une fonction de coût pour chaque infrastructure Iᵢ de la liste L2.

La fonction de coût comporte une composante permettant de prendre en compte les coefficients de corrélation calculés à l'étape précédente pour chaque infrastructure.

La fonction de coût comporte éventuellement d'autres composantes associées à des critères prédéfinis par l'utilisateur. L'utilisateur peut ainsi par exemple prédéfinir qu'une infrastructure est à privilégier par rapport à une autre infrastructure, en fonction du prix relatif des communications sur ces deux infrastructures. La composante correspondante de la fonction de coût sera faible pour l'infrastructure bon marché et élevée pour l'infrastructure coûteuse, de manière à pénaliser cette dernière.

La liste L2 est alors ordonnée selon la valeur de la fonction de coût de chaque infrastructure. Une liste ordonnée L3 des infrastructures accessibles est finalement obtenue.

A l'étape 180, une infrastructure de la liste L3 est sélectionnée.

Dans un premier mode de réalisation, la sélection est réalisée automatiquement en retenant la première infrastructure de la liste ordonnée L3.

Dans un second mode de réalisation, la liste ordonnée L3 est affichée sur un écran du terminal mobile 10 et l'utilisateur sélectionne lui-même une infrastructure dans cette liste.

La sélection d'une infrastructure particulière conduit à la mise en œuvre du module d'émission / réception correspondant. Celui-ci est éventuellement configuré avec des données d'accès, telles qu'un profil utilisateur, si par exemple des informations du type identifiant de l'utilisateur abonné à l'infrastructure sélectionnée, sont requises pour l'établissement d'une connexion avec l'infrastructure sélectionnée. Par exemple les informations d'une carte eSIM sont utilisées.

Puis, au fur et à mesure que le terminal mobile 10 parcourt la trajectoire tₙ, le module d'émission/réception Mᵢ adapté au protocole de l'infrastructure Iᵢ sélectionnée s'attache successivement aux différents points d'accès de l'infrastructure Iᵢ.

Avantageusement, dans une étape 190, lors de la première connexion à l'infrastructure Iᵢ sélectionnée, un tableau TPA comportant les identifiants des points d'accès de l'infrastructure Iᵢ sélectionnée situés le long de la trajectoire tₙ et, pour chaque point d'accès 14_i, ses caractéristiques de fonctionnement, est placé dans la base de données 31. De cette manière, au cours du déplacement du terminal mobile 10 le long de la trajectoire tₙ, le passage d'une cellule à l'autre de l'infrastructure Iᵢ sélectionnée s'effectuera plus rapidement, le terminal mobile 10 connaissant à l'avance le point d'accès 14_i suivant avec lequel établir une liaison et les caractéristiques de fonctionnement de ce point d'accès.

Le procédé comporte une phase 103 de mise à jour des cartographies Cₖᵢ.

Au cours du déplacement du terminal mobile 10, des grandeurs instantanées relatives à la qualité d'expérience associée à l'exécution de l'application Aₖ, alors que le terminal mobile 10 est connecté à l'infrastructure Ii sélectionnée, sont calculées en temps réel par le module 60 de qualité d'expérience du système 30.

Un fichier « log », Logₖᵢ, est alors créé dans la base de données 31 et enrichi progressivement.

Au cours de l'utilisation du terminal mobile plusieurs fichiers log sont créés pour différentes applications et/ou différentes infrastructures.

Lors de la connexion suivante du système 30 au terminal de service 16, par exemple au cours d'une nouvelle phase de paramétrage de la base de données 31, les fichiers « log » Logₖᵢ accumulés sur le terminal mobile 10 sont transférés sur le terminal de service 16. Ils y sont traités pour enrichir et mettre à jour les cartographies Cₖᵢ correspondantes. Les cartographies agrègent les fichiers log de différents utilisateurs.

Avantageusement, la date à laquelle une grandeur relative à la qualité d'expérience a été mesurée permet d'établir des cartographies élémentaires par plage horaire hⱼ.

Dans la description précédente, la mise en œuvre du procédé est réalisée au point de départ de la trajectoire tₙ avant que l'utilisateur, et par conséquent le terminal portable qu'il transporte, commande à parcourir la trajectoire sélectionnée. En variante, le procédé est mis en œuvre en n'importe laquelle des positions intermédiaires le long de la trajectoire tₙ. A partir de la position instantanée du terminal mobile 20, données par le moyen de localisation 20, le système détermine le point intermédiaire de la trajectoire à proximité duquel se trouve le terminal mobile 10. Le procédé est alors itéré entre la position intermédiaire et la position d'arrivée.

Avantageusement le terminal mobile 10 est pourvu d'un module 65 de détermination de trajectoires alternatives. Lorsque ce module est exécuté, il permet de construire des trajectoires alternatives tₙ* autour de la trajectoire tₙ sélectionné par l'utilisateur. Chaque trajectoire alternative fait l'objet du calcul d'un coefficient de corrélation avec les cartographies Cₖᵢ adaptées. Une trajectoire alternative constitue une variation spatiale et/ ou temporelle autour de la trajectoire de base.

Si, le long d'une trajectoire, une première infrastructure conduit à un coefficient de corrélation élevé, le long d'une trajectoire alternative, c'est peut-être une seconde infrastructure, différente de la première, qui conduira à un coefficient de corrélation élevé.

L'objet à sélectionner n'est alors plus une infrastructure par rapport à une trajectoire donnée, mais une paire constituée d'une infrastructure et d'une trajectoire alternative par rapport à une trajectoire donnée. A la fin de la mise en œuvre du procédé, l'utilisateur est invité à sélectionner la paire infrastructure / trajectoire alternative la mieux adaptée en termes de qualité d'expérience, compte tenu de la trajectoire tₙ initialement envisagée.

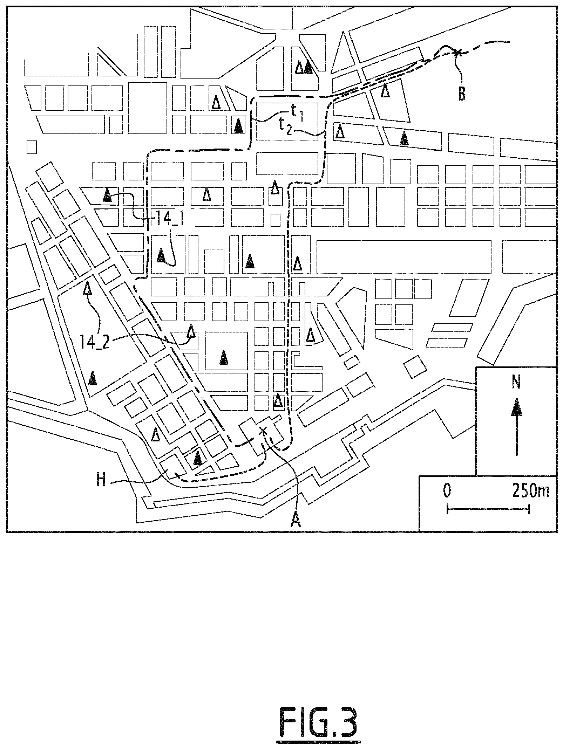

Est représenté schématiquement sur la figure 3 un exemple d'utilisation de ce procédé d'aide à la sélection d'une infrastructure.

Un utilisateur envisage de se déplacer entre la gare routière A proche de son hôtel H, au centre d'une ville, et l'aéroport B, placé en périphérie de la ville. Il souhaite partir du point A à une heure de départ pour arriver au point B à une heure d'arrivée (contrainte par l'heure de son vol).

Les lignes d'autobus n°1 et n°2 ont des itinéraires permettant d'effectuer ce déplacement.

Si l'utilisateur choisit la ligne n°1, la trajectoire t1 correspondante est chargée en mémoire du terminal 10.

Puis, la mise en œuvre du procédé permet d'obtenir une liste ordonnée des infrastructures accessibles le long de la trajectoire t1. Cette liste est élaborée à partir de la corrélation entre la trajectoire t1 et les cartographies associées à l'application que l'utilisateur va choisir d'exécuter durant son trajet, des infrastructures accessibles, et éventuellement de la plage horaire de la journée. Cette liste est également élaborée en tenant compte du profil de l'utilisateur : infrastructure préférée, infrastructure à laquelle l'utilisateur est abonné, etc.

Dans la liste ordonnée des infrastructures accessibles, l'utilisateur choisit l'une de ces infrastructures. Le terminal mobile, pour l'exécution de l'application A_{K}, se connecte à l'infrastructure sélectionnée alors que l'utilisateur commence à parcourir la trajectoire t1.

Si le module 65 est actif sur le terminal mobile 10, alors que l'utilisateur choisit initialement la trajectoire t1 pour aller de A à B, le module 65 recherche des trajectoires alternatives. Ainsi, parmi les différentes lignes de bus permettant de relier l'aéroport depuis son hôtel, le terminal 10 identifie la trajectoire t2. Simultanément aux calculs pour la trajectoire t1, des calculs similaires sont effectués pour la trajectoire t2.

L'utilisateur est finalement invité à sélectionner une paire infrastructure / trajectoire. Ainsi alors qu'il pensait initialement utiliser la ligne de bus n°1, l'utilisateur prend la ligne de bus n°2, de manière à suivre une trajectoire t2 qui présente une valeur prévue de qualité d'expérience supérieure à celle associée à la trajectoire t1.

Dans encore une autre variante, le terminal mobile détermine la liste ordonnée des infrastructures adaptées au type d'application Aₖ, que cette application soit ou non exécutée à l'instant courant. Alors, au moment de l'exécution d'une application particulière, l'utilisateur est invité à consulter la liste ordonnée des infrastructures disponibles associée cette application et à sélectionner la meilleure infrastructure.

En variante, la trajectoire choisie est subdivisée en trajectoires élémentaires, pour chacune desquelles le terminal mobile 10 détermine la meilleure infrastructure. Ainsi dans l'exemple de la figure 3, l'utilisateur part à pied de son hôtel H en marchant jusqu'à la gare routière A. Il souhaite pouvoir recevoir des appels téléphoniques. Il choisit donc de se connecter à une infrastructure GSM. Il doit ensuite prendre un autobus pour l'amener jusqu'à l'aéroport, sachant qu'il souhaiterait durant ce déplacement regarder un bulletin d'informations sous la forme d'un flux vidéo. Une infrastructure Wi-Fi est la plus adaptée au transfert de ces données. Alors, parmi les différentes lignes de bus permettant d'aller à l'aéroport, il choisit la trajectoire t2 qui lui permet de passer à portée des points d'accès gratuits de l'infrastructure gérée par son opérateur habituel. Arrivée à l'aéroport, en attendant son vol, l'utilisateur souhaite regarder ses emails. Il se connecte via une infrastructure 3G pour recevoir et émettre des emails.

Le fichier log comporte à chaque instant une mesure d'une grandeur correspondant à la qualité d'expérience perçue par l'utilisateur lors de l'exécution de l'application Aₖ, le terminal mobile étant connecté à l'infrastructure Iᵢ. Eventuellement si plusieurs applications sont exécutées simultanément ou si certaines grandeurs relatives à la qualité d'expérience peuvent être déterminées sans que l'application correspondante soit exécutée ou tout au moins exécutée en tâche d'arrière-plan, différents fichiers log sont enrichis simultanément.

## Revendications

1. Système (30), pour un terminal mobile (10), d'aide à la sélection d'une infrastructure (Iᵢ) de radiocommunication parmi une pluralité d'infrastructures de radiocommunication disponibles, en vue d'établir une liaison de communication entre le terminal mobile et une infrastructure sélectionnée permettant à une application (Aₖ) exécutée sur le terminal mobile d'accéder à une ressource distante (Sₖ), le système mis en œuvre sur le terminal mobile comportant :
- une base de données (31) comportant une pluralité de cartographies (Cᵢₖ), chaque cartographie étant associée à une infrastructure de ladite pluralité d'infrastructures et à un type d'application, une cartographie donnant, en chaque point d'une zone géographique, une valeur locale d'une grandeur relative à une qualité d'expérience associée à une exécution d'une application dudit type d'application accédant à ladite ressource distante à travers ladite infrastructure ; et une pluralité de trajectoire susceptibles d'être suivies par le terminal mobile à travers ladite zone géographique ;
- un moyen de sélection (40) permettant à un utilisateur du terminal de choisir une trajectoire (tₙ) parmi la pluralité de trajectoires mémorisées dans la base de données (31) ;
- un moyen de localisation (20) propre à générer une position courante du terminal mobile ;
- un module de détermination de trajectoires alternatives configuré pour calculer une ou plusieurs trajectoires alternatives à la trajectoire (tₙ) sélectionnée initialement par l'utilisateur ;
- un moyen de corrélation (50) propre, à partir de la position courante et de la trajectoire sélectionnée, et pour chaque cartographie associée au type d'application correspondant à ladite application exécutée sur le terminal mobile, à déterminer un coefficient de corrélation ; le coefficient de corrélation calculé par le moyen de corrélation résultant de l'intégration, le long de la trajectoire sélectionnée, d'une fonction de la qualité d'expérience locale indiquée sur la cartographie considérée ; ledit moyen de corrélation étant configuré pour déterminer de la même façon en utilisant les cartographies adaptées un coefficient de corrélation pour chaque trajectoire alternative déterminée ;
- un moyen de sélection propre, sur la base des coefficients de corrélation calculés, à sélectionner une paire constituée d'une infrastructure parmi ladite pluralité d'infrastructures et al une trajectoire parmi lesdites trajectoires alternatives.

2. Système (30) selon la revendication 1, dans lequel le moyen de sélection comporte un moyen de classement (55) propre à calculer une fonction de coût à partir des coefficients de corrélation et de paramètres de fonctionnement ou d'usage dudit terminal mobile, la valeur de la fonction de coût calculée pour chaque infrastructure permettant d'obtenir une liste ordonnée des infrastructures disponibles, le moyen de sélection utilisant ladite liste ordonnée pour sélectionner une infrastructure.

3. Système (30) selon la revendication 1 ou la revendication 2, comportant un moyen (60) de mesure de la qualité d'expérience associée à l'exécution de l'application (Aₖ) ou d'une application différente du terminal mobile lorsqu'elles accèdent à une ressource distante alors que le terminal mobile est connecté à l'infrastructure (Iᵢ) sélectionnée, les mesures étant stockées dans un fichier « log » (Logₖᵢ) du terminal mobile (10).

4. Système (30) selon l'une quelconque des revendications 1 à 3, dans lequel chaque cartographie (Cₖᵢ) de la base de données (31) comporte une pluralité de cartographies élémentaires (Cₖᵢ(hⱼ)), chaque cartographie élémentaire étant associée à une plage horaire (hⱼ) spécifique, le moyen de corrélation (50) étant propre à choisir, pour chaque cartographie, une cartographie élémentaire parmi les cartographies élémentaires de ladite cartographie en fonction de la plage horaire des cartographies élémentaires et de la position courante et de la trajectoire sélectionnée, le coefficient de corrélation de l'infrastructure correspondante étant déterminé en utilisant la cartographie élémentaire choisie.

5. Système (30) selon l'une quelconque des revendications 1 à 4, dans lequel une position associe un point géographique, défini par trois coordonnées spatiales, et un instant, défini par une coordonnée temporelle, et une trajectoire est un ensemble de positions successives.

6. Système (30) selon l'une quelconque des revendications 1 à 5, dans lequel le moyen de sélection est propre à actualiser la trajectoire sélectionnée dans la base de données, en prenant comme position sur la trajectoire la position courante délivrée par le moyen de localisation.

7. Système (30) selon l'une quelconque des revendications 1 à 6, dans lequel le moyen de corrélation est apte à pondérer chaque cartographie (Cₖᵢ) associée à une infrastructure(li) avec des caractéristiques de fonctionnement du terminal mobile (10).

8. Ensemble constitué d'un terminal serveur (16) et d'une pluralité de systèmes (30) d'aide à la sélection d'une infrastructure de radiocommunication, chaque système étant conforme à un système selon l'une quelconque des revendications 1 à 7, chaque système étant mis en œuvre par un terminal mobile (10), **caractérisé en ce que** le terminal serveur comporte une pluralité de cartographies (Cₖᵢ), chaque cartographie étant associée à une infrastructure (Iᵢ) d'une pluralité d'infrastructures disponibles dans une zone géographique et à un type d'application, une cartographie donnant en chaque point de ladite zone géographique une valeur locale d'une grandeur relative à une qualité d'expérience associée à une exécution d'une application (Aₖ) dudit type d'application accédant à une ressource (Sₖ) distante alors que le terminal mobile (10) sur lequel l'application est exécutée est connecté à ladite infrastructure.

9. Ensemble selon la revendication 8, dans lequel chaque cartographie (Cₖᵢ) comporte une pluralité de cartographies élémentaires (Cₖᵢ(hⱼ)) à chaque cartographie élémentaire étant associée à une plage horaire (hⱼ).

10. Procédé (100, 200), pour un terminal mobile (10), d'aide à la sélection d'une infrastructure (Iᵢ) de radiocommunication parmi une pluralité d'infrastructures de radiocommunication disponibles, en vue d'établir une liaison de communication entre le terminal mobile et l'infrastructure sélectionnée à une application (Aₖ) exécutée sur le terminal mobile d'accéder à une ressource (Sₖ) distante, le procédé comportant les étapes consistant à :
- fournir une pluralité de cartographies (Cₖᵢ) contenue dans une base de données, chaque cartographie étant associée à une infrastructure de ladite pluralité d'infrastructures et donnant en chaque point d'une zone géographique une valeur locale d'une grandeur relative à une qualité d'expérience associée à une exécution de ladite application accédant à ladite ressource distante à travers ladite infrastructure
- fournir une pluralité de trajectoires susceptibles d'être suivies par ledit terminal mobile à travers ladite zone géographique ;
- sélectionner une trajectoire parmi la pluralité de trajectoires mémorisées dans la base de données (31) ;
- localiser le terminal mobile (10) à l'instant courant (t) de manière à générer une position courante du terminal mobile ;
- calculer une ou plusieurs trajectoires alternatives à la trajectoire sélectionnée initialement par l'utilisateur à l'aide d'un module de détermination de trajectoires alternatives ;
- calculer, à partir de ladite position courante et de la trajectoire sélectionnée, et pour chaque cartographie associée au type d'application correspondant à ladite application exécutée sur le terminal mobile, un coefficient de corrélation, le coefficient de corrélation calculé par le moyen de corrélation résultant de l'intégration, le long de la trajectoire sélectionnée, d'une fonction de la qualité d'expérience locale indiquée sur la cartographie considérée ; un coefficient de corrélation pour chaque trajectoire alternative est calculé de la même façon en utilisant les cartographies adaptées ;
- sélectionner, sur la base des coefficients de corrélation calculés, une paire constituée d'une infrastructure parmi ladite pluralité d'infrastructures et une trajectoire alternative parmi lesdites trajectoires alternatives de sorte que la qualité d'expérience associée à ladite trajectoire alternative est supérieure à la qualité d'expérience associée à la trajectoire initialement sélectionnée.

11. Procédé (100, 200) selon la revendication 10, dans lequel, chaque cartographie (Cₖᵢ) de la base de données comportant une pluralité de cartographies élémentaires (Cₖⱼ(hⱼ)), chaque cartographie élémentaire étant associée à une plage horaire (hⱼ), spécifique, l'étape de calcul d'un coefficient de corrélation consiste d'abord à choisir, pour chaque cartographie, une cartographie élémentaire parmi les cartographies élémentaires de ladite cartographie en fonction de la plage horaire des cartographies élémentaires et de la position courante et de la ou chaque position à venir, puis à calculer le coefficient de corrélation de l'infrastructure correspondante en utilisant la cartographie élémentaire choisie.

12. Procédé (100, 200) selon la revendication 10 ou la revendication 11, comportant une étape de calcul d'une fonction de coût à partir des coefficients de corrélation et de paramètres de fonctionnement ou d'usage dudit terminal mobile, la valeur de la fonction de coût calculée pour chaque infrastructure permettant d'obtenir une liste ordonnée des infrastructures disponibles, l'étape de sélection utilisant ladite liste ordonnée pour sélectionner une infrastructure.

13. Procédé (100, 200) selon l'une quelconque des revendications 10 à 12,comportant une étape de création d'un fichier « log » (Logₖᵢ), au cours de laquelle est mesurée et enregistrée en temps réel une grandeur relative à une qualité d'expérience associée à l'exécution de l'application (Aₖ) ou d'une application différente du terminal mobile (10) lorsqu'elles accèdent à une ressource distante alors que le terminal mobile (10) est connecté à l'infrastructure (Iᵢ) sélectionnée, ledit fichier « log » étant propre à être téléchargé sur un terminal serveur et utilisé pour la mise à jour de la cartographie correspondante, le terminal mobile venant régulièrement se connecter audit terminal distant afin de télécharger dans sa base de données (31) des cartographies (Cₖᵢ) mises à jour.

## Patentansprüche

1. System (30) für ein mobiles Endgerät (10) zur Unterstützung bei der Auswahl einer Infrastruktur (Iᵢ) für die Funkkommunikation aus einer Vielzahl von verfügbaren Infrastrukturen für die Funkkommunikation, um eine Kommunikationsverbindung zwischen dem mobilen Endgerät und einer ausgewählten Infrastruktur zu etablieren, es einer auf dem mobilen Endgerät ausgeführten Anwendung (Aₖ) ermöglichend, auf eine entfernte Ressource (Sₖ) zuzugreifen, wobei das auf dem mobilen Endgerät eingesetzte System Folgendes umfasst:
- eine Datenbank (31), eine Vielzahl von Kartografien (Cᵢₖ) umfassend, wobei jede Kartografie mit einer Infrastruktur aus der Vielzahl von Infrastrukturen und einer Anwendungsart assoziiert ist, wobei eine Kartografie in jedem Punkt einer geografischen Zone einen lokalen Wert einer Größe relativ zu einer Erfahrungsqualität liefert, assoziiert mit einer Ausführung einer Anwendung des Anwendungstyps, über die Infrastruktur auf die entfernte Ressource zugreifend; und eine Vielzahl von durch das mobile Endgerät über die geografische Zone nachverfolgbaren Pfaden;
- ein Auswahlmittel (40), es einem Benutzer des Endgeräts ermöglichend, aus der Vielzahl von in der Datenbank (31) gespeicherten Pfaden einen Pfad (tₙ) auszuwählen;
- ein Lokalisierungsmittel (20), geeignet, um eine aktuelle Position des mobilen Endgeräts zu generieren;
- ein Modul zur Bestimmung von alternativen Pfaden, konfiguriert, um einen oder mehrere alternative Pfade zu dem anfänglich von dem Benutzer ausgewählten Pfad (tₙ) zu kalkulieren;
- ein Korrelationsmittel (50), geeignet, um ausgehend von der aktuellen Position und von dem ausgewählten Pfad und für jede mit der auf dem mobilen Endgerät ausgeführten Anwendung entsprechenden Anwendungsart assoziierte Kartografie einen Korrelationskoeffizienten festzulegen; wobei der durch das Korrelationsmittel kalkulierte Korrelationskoeffizient aus der Integration einer Funktion der auf der in Betracht gezogenen Kartografie angegebenen lokalen Erfahrungsqualität entlang des Pfades resultiert; wobei das Korrelationsmittel konfiguriert ist, um unter Verwendung der angepassten Kartografien auf die gleiche Weise für jeden festgelegten alternativen Pfad einen Korrelationskoeffizienten festzulegen;
- ein Auswahlmittel, geeignet, um auf der Basis der kalkulierten Koeffizienten ein Paar bestehend aus einer Infrastruktur aus der Vielzahl von Infrastrukturen und einem Pfad aus den alternativen Pfaden auszuwählen.

2. System (30) nach Anspruch 1, in welchem das Auswahlmittel ein Klassifizierungsmittel (55) umfasst, geeignet, um eine Kostenfunktion ausgehend von Korrelationskoeffizienten und Funktions- oder Verwendungsparametern des mobilen Endgeräts zu kalkulieren, wobei es der Wert der kalkulierten Kostenfunktion für jede Infrastruktur ermöglicht, eine geordnete Liste der verfügbaren Infrastrukturen zu erhalten, wobei das Auswahlmittel die geordnete Liste zum Auswählen einer Infrastruktur verwendet.

3. System (30) nach Anspruch 1 oder Anspruch 2, umfassend ein Mittel (60) zum Messen der mit der Ausführung der Anwendung (Aₖ) oder einer anderen Anwendung des mobilen Endgeräts assoziierten Erfahrungsqualität, während sie auf eine entfernte Ressource zugreifen, wohingegen das mobile Endgerät mit der ausgewählten Infrastruktur (Iᵢ) verbunden ist, wobei die Messungen in einer "Log"-Datei (Logₖᵢ) des mobilen Endgeräts (10) gespeichert werden.

4. System (30) nach einem der Ansprüche 1 bis 3, in welchem jede Kartografie (Cₖᵢ) der Datenbank (31) eine Vielzahl von elementaren Kartografien (Cₖᵢ(hⱼ)) umfasst, wobei jede elementare Kartografie mit einem spezifischen Zeitfenster (hⱼ) assoziiert ist, wobei das Korrelationsmittel (50) geeignet ist, um für jede Kartografie eine elementare Kartografie aus den elementaren Kartografien der Kartografie auszuwählen gemäß dem Zeitfenster der elementaren Kartografien und der aktuellen Position und dem ausgewählten Pfad, wobei der Korrelationskoeffizient der entsprechenden Infrastruktur unter Verwendung der ausgewählten elementaren Kartografie festgelegt wird.

5. System (30) nach einem der Ansprüche 1 bis 4, in welchem eine mit einem geografischen Punkt assoziierte Position, definiert durch drei Raumkoordinaten, und ein Moment, definiert durch eine Zeitkoordinate, und ein Pfad eine Gesamtheit von sukzessiven Positionen bilden.

6. System (30) nach einem der Ansprüche 1 bis 5, in welchem das Auswahlmittel geeignet ist, den ausgewählten Pfad in der Datenbank zu aktualisieren, die von dem Lokalisierungsmittel bereitgestellte aktuelle Position als Position auf dem Pfad verwendend.

7. System (30) nach einem der Ansprüche 1 bis 6, in welchem das Korrelationsmittel in der Lage ist, jede mit einer Infrastruktur (Iᵢ) assoziierte Kartografie (Cₖᵢ) mit Funktionseigenschaften des mobilen Endgeräts (10) zu gewichten.

8. Gesamtheit, bestehend aus einem Server-Endgerät (16) und einer Vielzahl von Systemen (30) zur Unterstützung bei der Auswahl einer Infrastruktur zur Funkkommunikation, wobei jedes System konform ist mit einem System nach einem der Ansprüche 1 bis 7, wobei jedes System von einem mobilen Endgerät (10) eingesetzt wird, **dadurch gekennzeichnet, dass** das Server-Endgerät eine Vielzahl von Kartografien (Cₖᵢ) umfasst, wobei jede Kartografie mit einer Infrastruktur (Iᵢ) aus eine Vielzahl von in einer geografischen Zone verfügbaren Infrastrukturen und einem Anwendungstyp assoziiert ist, wobei eine Kartografie in jedem Punkt der geografischen Zone einen lokalen Wert von einer Größe relativ zu einer mit einer Ausführung einer Anwendung (Aₖ) des Anwendungstyps, auf eine entfernte Ressource (Sₖ) zugreifend, während das mobile Endgerät (10), auf dem die Anwendung ausgeführt wird, mit der Infrastruktur verbunden ist.

9. Gesamtheit nach Anspruch 8, in welcher jede Kartografie (Cₖᵢ) eine Vielzahl von elementaren Kartografien (Cₖᵢ(hⱼ)) umfasst, wobei jede elementare Kartografie mit einem Zeitfenster (hⱼ) assoziiert ist.

10. Verfahren (100, 200) für ein mobiles Endgerät (10) zur Unterstützung bei der Auswahl einer Infrastruktur (Iᵢ) zur Funkkommunikation aus einer Vielzahl von verfügbaren Infrastrukturen zur Funkkommunikation, um eine Kommunikationsverbindung zwischen dem mobilen Endgerät und der ausgewählten Infrastruktur für eine auf dem mobilen Endgerät ausgeführte Anwendung (Aₖ) zu etablieren, um auf eine entfernte Ressource (Sₖ) zuzugreifen, wobei das Verfahren die folgenden Schritte umfasst:
- Liefern einer Vielzahl von in einer Datenbank enthaltenen Kartografien (Cₖᵢ), wobei jede Kartografie mit einer Infrastruktur aus der Vielzahl von Infrastrukturen assoziiert ist und an jedem Punkt einer geografischen Zone einen lokalen Wert von einer Größe relativ zu einer Erfahrungsqualität bereitstellt, assoziiert mit einer Ausführung der über die Infrastruktur auf die entfernte Ressource zugreifende Anwendung;
- Liefern einer Vielzahl von durch das mobile Endgerät über die geografische Zone nachverfolgbaren Pfaden;
- Auswählen eines Pfades aus der in der Datenbank (31) gespeicherten Vielzahl von Pfaden;
- Lokalisieren des mobilen Endgeräts (10) im aktuellen Moment (t), sodass eine aktuelle Position des mobilen Endgeräts generiert wird;
- Kalkulieren eines oder mehrerer alternativer Pfade zu dem anfänglich durch den Benutzer ausgewählten Pfad mithilfe eines Moduls zur Bestimmung von alternativen Pfaden;
- Kalkulieren, ausgehend von der aktuellen Position des ausgewählten Pfades und für jede mit der auf dem mobilen Endgerät ausgeführten Anwendungsart assoziierte Kartografie, eines Korrelationskoeffizienten, wobei der über das Korrelationsmittel kalkulierte Korrelationskoeffizient aus der Integration einer Funktion der auf der in Betracht gezogenen Kartografie angegebenen lokalen Erfahrungsqualität entlang des ausgewählten Pfades resultiert; wobei für jeden alternativen Pfad unter Verwendung der angepassten Kartografien auf die gleiche Weise ein Korrelationskoeffizient kalkuliert wird;
- Auswählen auf der Basis der kalkulierten Korrelationskoeffizienten eines Paares bestehend aus einer Infrastruktur aus der Vielzahl von Infrastrukturen und eines alternativen Pfades aus den alternativen Pfaden, solcherart, dass die mit dem alternativen Pfad assoziierte Erfahrungsqualität höher ist als die mit dem anfänglich ausgewählten Pfad assoziierte Erfahrungsqualität.

11. Verfahren (100, 200) nach Anspruch 10, in welchem der Kalkulationsschritt eines Korrelationskoeffizienten darin besteht, zuerst für jede Kartografie eine elementare Kartografie aus den elementaren Kartografien auszuwählen gemäß dem Zeitfenster der elementaren Kartografien und der oder jeder kommenden Position, und dann den Korrelationskoeffizienten der entsprechenden Infrastruktur unter Verwendung der ausgewählten elementaren Kartografie zu kalkulieren, wobei jede Kartografie (Cₖᵢ) aus der Datenbank eine Vielzahl von elementaren Kartografien (Cₖⱼ)hⱼ)) enthält, wobei jede elementare Kartografie mit einem spezifischen Zeitfenster (hⱼ) assoziiert ist.

12. Verfahren (100, 200) nach Anspruch 10 oder Anspruch 11, umfassend einen Schritt der Kalkulation einer Kostenfunktion ausgehend von den Korrelationskoeffizienten und den Funktions- oder Verwendungsparametern des mobilen Endgeräts, wobei es der Wert der kalkulierten Kostenfunktion für jede Infrastruktur ermöglicht, eine geordnete Liste der verfügbaren Infrastrukturen zu erhalten, wobei der Auswahlschritt die geordnete Liste zum Auswählen einer Infrastruktur verwendet.

13. Verfahren (100, 200) nach einem der Ansprüche 10 bis 12, umfassend einen Schritt der Erstellung einer "Log"-Datei (Logₖᵢ), im Zuge dessen eine Größe in Echtzeit gemessen und gespeichert wird relativ zu einer Erfahrungsqualität, assoziiert mit der Ausführung der Anwendung (Aₖ) oder einer anderen Anwendung des mobilen Endgeräts (10), wenn sie auf eine entfernte Quelle zugreifen, während das mobile Endgerät (10) mit der ausgewählten Infrastruktur (Iᵢ) verbunden ist, wobei die "Log"-Datei geeignet ist, um auf ein Server-Endgerät heruntergeladen und für die Aktualisierung der entsprechenden Kartografie verwendet zu werden, wobei sich das mobile Endgerät regelmäßig mit dem entfernten Endgerät verbindet, um in seine Datenbank (31) aktualisierte Kartografien (Cₖᵢ) herunterzuladen.

## Claims

1. A system (30), for a movable terminal (10), for assisting in the selection of a radiocommunication infrastructure (Iᵢ) among a plurality of available radiocommunication infrastructures, with a view to establish a communication link between the movable terminal and a selected infrastructure allowing an application (Aₖ) executed on the movable terminal to access a remote resource (Sₖ), the system implemented on the movable terminal including:
- a database (31) including a plurality of mappings (Cᵢₖ), each mapping being associated with an infrastructure of said plurality of infrastructures and with a type of application, a mapping giving, at each point of a geographical area, a local value of a quantity relating to a quality of experience associated with an execution of an application of said type of application accessing said remote resource through said infrastructure; and a plurality of trajectories capable of being followed by the movable terminal through said geographical area;
- a selection means (40) allowing a user of the terminal to choose a trajectory (tₙ) among the plurality of trajectories stored in the database (31);
- a localization means (20) suitable for generating a current position of the movable terminal;
- a module for determining alternative trajectories configured to calculate one or more trajectories alternative to the trajectory (tₙ) initially selected by the user;
- a correlation means (50) suitable for, from the current position and the selected trajectory, and for each mapping associated with the type of application corresponding to said application executed on the movable terminal, determining a correlation coefficient; the correlation coefficient calculated by the correlation means resulting from the integration, along the selected trajectory, of a function of the quality of local experience indicated on the considered mapping; said correlation means being configured to determine in the same way by using the adapted mappings a correlation coefficient for each determined alternative trajectory;
- a selection means suitable for, on the basis of the calculated correlation coefficients, selecting a pair consisting of an infrastructure among said plurality of infrastructures and a trajectory among said alternative trajectories.

2. The system (30) according to claim 1, wherein the selection means includes a classification means (55) suitable for calculating a cost function from the correlation coefficients and operation or use parameters of said movable terminal, the value of the cost function calculated for each infrastructure making it possible to obtain an ordered list of available infrastructures, the selection means using said ordered list to select an infrastructure.

3. The system (30) according to claim 1 or claim 2, including means (60) for measuring the quality of experience associated with the execution of the application (Aₖ) or of a different application of the movable terminal when they access a remote resource while the movable terminal is connected to the selected infrastructure (Iᵢ), the measurements being stored in a «log» (Logₖᵢ) file of the movable terminal (10).

4. The system (30) according to any one of claims 1 to 3, wherein each mapping (Cₖᵢ) of the database (31) includes a plurality of elementary mappings (Cₖᵢ(hⱼ)), each elementary mapping being associated with a specific time range (hⱼ), the correlation means (50) being able to choose, for each mapping, an elementary mapping among the elementary mappings of said mapping as a function of the time range of the elementary mappings and of the current position and of the selected trajectory, the correlation coefficient of the corresponding infrastructure being determined using the selected elementary mapping.

5. The system (30) according to any one of claims 1 to 4, wherein a position associates a geographical point, defined by three spatial coordinates, and an instant, defined by a temporal coordinate, and a trajectory is a set of successive positions.

6. The system (30) according to any one of claims 1 to 5, wherein the selection means is suitable for updating the trajectory selected in the database, taking as position on the trajectory the current position delivered by the localization means.

7. The system (30) according to any one of claims 1 to 6, wherein the correlation means is able to weight each mapping (Cₖᵢ) associated with an infrastructure (li) with operating characteristics of the movable terminal (10).

8. An assembly consisting of a server terminal (16) and a plurality of systems (30) for assisting in the selection of a radiocommunication infrastructure, each system being in accordance with a system according to any one of claims 1 to 7, each system being implemented by a movable terminal (10), **characterized in that** the server terminal includes a plurality of mappings (Cₖᵢ), each mapping being associated with an infrastructure (li) of a plurality of infrastructures available in a geographical area and in a type of application, a mapping giving at each point of said geographical area a local value of a quantity relating to a quality of experience associated with an execution of an application (Aₖ) of said type of application accessing a remote resource (Sₖ) while the movable terminal (10) on which the application is executed, is connected to said infrastructure.

9. The assembly according to claim 8, wherein each mapping (Cₖᵢ) includes a plurality of elementary mappings (Cₖᵢ(hⱼ)) at each elementary mapping being associated with a time range (hⱼ).

10. A method (100, 200), for a movable terminal (10), for assisting in the selection of a radiocommunication infrastructure (Iᵢ) among a plurality of available radiocommunication infrastructures, with a view to establish a communication link between the movable terminal and the selected infrastructure to an application (Aₖ) executed on the movable terminal to access a remote resource (Sₖ), the method including the steps consisting of:
- providing a plurality of mappings (Cₖᵢ) contained in a database, each mapping being associated with an infrastructure of said plurality of infrastructures and giving at each point of a geographical area a local value of a quantity relating to a quality of experience associated with an execution of said application accessing said remote resource through said infrastructure
- providing a plurality of trajectories likely to be followed by said movable terminal through said geographical area;
- selecting a trajectory among the plurality of trajectories stored in the database (31);
- locating the movable terminal (10) at the current instant (t) so as to generate a current position of the movable terminal;
- calculating one or more trajectories alternative to the trajectory initially selected by the user using a module for determining alternative trajectories;
- calculating, from said current position and from the selected trajectory, and for each mapping associated with the type of application corresponding to said application executed on the movable terminal, a correlation coefficient, the correlation coefficient calculated by the correlation means resulting from the integration, along the selected trajectory, of a function of the local quality of experience indicated on the considered mapping; a correlation coefficient for each alternative trajectory is calculated in the same way by using the adapted mappings;
- selecting, on the basis of the calculated correlation coefficients, a pair consisting of an infrastructure among said plurality of infrastructures and an alternative trajectory among said alternative trajectories so that the quality of service experience associated with said alternative trajectory is greater than the quality of experience service associated with the initially selected trajectory.

11. The method (100, 200) according to claim 10, wherein, each mapping (Cₖᵢ) of the database including a plurality of elementary mappings (Cₖⱼ(hⱼ)), each elementary mapping being associated with a time range (hj), specific, the step of calculating a correlation coefficient consists first of all in choosing, for each mapping, an elementary mapping among the elementary mappings of said mapping as a function of the time range of the elementary mappings and of the current position and of the or each future position, then in calculating the correlation coefficient of the corresponding infrastructure using the selected elementary mapping.

12. The method (100, 200) according to claim 10 or claim 11, including a step of calculating a cost function among the correlation coefficients and operation or use parameters of said movable terminal, the value of the cost function calculated for each infrastructure making it possible to obtain an ordered list of available infrastructures, the selection step using said ordered list to select an infrastructure.

13. The method (100, 200) according to any one of claims 10 to 12, including a step of creating a «log» (Logk) file, during which a relative quantity to a quality of experience associated with the execution of the application (Aₖ) or of a different application of the movable terminal (10) is measured and recorded in real time when they access a remote resource while the movable terminal (10) is connected to the selected infrastructure (Iᵢ), said «log» file being suitable for being downloaded to a server terminal and used for updating the corresponding mapping, the movable terminal regularly coming to be connected to said remote terminal in order to download into its base data (31) of the updated mappings (Cₖᵢ).
